# EUROPÄISCHE PATENTSCHRIFT

(11) **EP 1 908 647 B1**
(45) Veröffentlichungstag und Bekanntmachung des Hinweises auf die Patenterteilung: **01.05.2013**
(21) Anmeldenummer: 07023295.4
(22) Anmeldetag: 22.12.2005
(51) Int. Cl.: B60R 21/26, B60R 21/20

(54) **Gassackmodul**
Air bag module
Module d'airbag

(30) Priorität: 21.01.2005 DE 202005000999 U; 25.05.2005 DE 102005024113
(43) Veröffentlichungstag der Anmeldung: 09.04.2008
(62) Teilanmeldung aus: 05028171.6
(73) Patentinhaber: TRW Automotive Safety Systems GmbH, 63743 Aschaffenburg (DE)
(72) Erfinder: Schneider, Michael Dr., 63834 Sulzbach (DE)
(74) Vertreter: Prinz & Partner

(56) Entgegenhaltungen:
- DE-A1- 19 813 832
- US-A- 5 362 101
- US-A- 5 899 495
- US-B1- 6 390 501

## Beschreibung

Die vorliegende Erfindung betrifft ein Gassackmodul mit einem Gassack, dessen Wandung in einem ersten Zustand des Gassacks wenigstens eine Falte aufweist, die dadurch gebildet ist, daß gegenüberliegende Abschnitte der Wandung aneinander anliegen, und mit einem Haltemittel, das die gegenüberliegenden Abschnitte aneinander hält und die Falte fixiert.

Für gewöhnlich soll bei einem Gassackmodul eines Fahrzeuginsassen-Rückhaltesystems der Gassack mit dem von einem Gasgenerator erzeugten Gas möglichst schnell befüllt werden. In bestimmten Fällen, beispielsweise bei einer Kollision mit vergleichsweise geringer Geschwindigkeit oder in Abhängigkeit von der Größe, dem Gewicht oder der Position eines zu schützenden Fahrzeuginsassen, ist es jedoch wünschenswert, einen weicheren Gassack zur Verfügung zu stellen. Zu diesem Zweck können beispielsweise Abströmöffnungen im Modulgehäuse vorgesehen sein, durch die ein Teil des verfügbaren Gasvolumens ausströmen kann. Diese Lösung hat jedoch den Nachteil, daß Bauraum im Modulgehäuse für die Abströmöffnung selbst sowie einen möglichen Öffnungsmechanismus vorgehalten werden muß.

Eine weitere, seit langem bekannte Möglichkeit zur Erzielung eines verringerten Gassackinnendrucks besteht darin, in der Wandung des nicht aufgeblasenen Gassacks eine Falte vorzusehen, indem gegenüberliegende Wandungsabschnitte aneinander anliegen, wobei die Falte durch eine Reißnaht fixiert wird. Steigt nun nach Aktivierung des Gassackmoduls der Gassackinnendruck über einen vorbestimmten Wert, so reißt die Reißnaht auf, wodurch sich das Volumen des Gassacks vergrößert und der Gassackinnendruck verringert. Auch ist es bekannt, im Bereich der Falte eine Abströmöffnung vorzusehen, die zunächst durch die Falte verschlossen und nach dem Reißen der Reißnaht freigelegt ist, wodurch eine weitere Absenkung des Gassackinnendrucks erreicht werden kann.

Die US 5,362,101 A zeigt ein Gassackmodul mit Fangbändern, die eine Entfaltung des Gassacks in Richtung zum Insassen begrenzen. In einem durch Reißnähte fixierten, gefalteten Fangbandzustand nimmt der Gassack eine erste Entfaltungsposition ein. Steigt die Zugkraft in den Fangbändern über einen vorgegebenen Grenzwert, so verlängern sich die Fangbänder infolge einer Zerstörung der Reißnähte. Der Gassack nimmt dann eine weiterhin durch die Länge der Fangbänder definierte, zweite Entfaltungsposition ein, in welcher sich die Gassackwandung näher zum Insassen erstreckt als in der ersten Entfaltungsposition.

In der US 5,899,495 A wird ein gattungsgemäßes Gassackmodul mit einem Gassack beschrieben, dessen Gassackwandung zwei umlaufend miteinander vernähte, kreisrunde Zuschnittsteile aufweist. Im flach ausgebreiteten Zustand liegen die Zuschnittsteile übereinander, wobei randseitige Kreissegmentabschnitte radial nach innen gefaltet und durch eine Reißnaht fixiert sind. Ab einem vorbestimmbaren Gassackinnendruck werden die als Haltemittel wirkenden Reißnähte zerstört, und der Gassack verformt sich von einem ersten aufgeblasenen Zustand mit fixierten Falten in einen zweiten aufgeblasenen Zustand mit gelösten Falten.

Die Erfindung schafft ein Gassackmodul, dessen Gassack im Rückhaltefall das Lenkrad sicher abdeckt.

Dies wird erfindungsgemäß bei einem Gassackmodul mit einem Gassack, dessen Wandung in einem ersten, teilaufgeblasenen Zustand des Gassacks wenigstens eine Falte aufweist, die dadurch gebildet ist, daß gegenüberliegende Abschnitte der Wandung aneinander anliegen, und mit einem die Falte fixierenden Haltemittel dadurch erreicht, daß der Gassack im Zuschnitt eine Ausbuchtung aufweist, die radial außerhalb des die Falte bildenden Abschnitts der Gassackwandung angeordnet ist. Durch die Ausbuchtung ist sichergestellt, daß der aufgeblasene Gassack im Zustand mit zusammengelegter Falte ein gleichmäßig rundes Profil aufweist, welches das Lenkrad in allen Richtungen gleichmäßig verdeckt. Diese Ausführungsform kann vorteilhaft mit den nachfolgend erwähnten kombiniert werden, muß es jedoch nicht zwingend. Beispielsweise könnte der entsprechend zugeschnittene Gassack auch mit passiv lösbaren Haltemitteln (Reißnähte, anderweitig zerstörte Haltemittel) kombiniert werden.

Nachteilig an der bekannten Ausgestaltung ist ferner, daß mit ihr keine situationsabhängige Anpassung des Gassackinnendrucks möglich ist. Die Reißnaht wird in jedem Fall genau dann reißen, wenn der durch die Eigenschaften der Reißnaht fest vorgegebene Gassackinnendruck erreicht ist.

Demgegenüber schafft die Erfindung ein Gassackmodul, das eine rasche Verringerung des Gassackinnendrucks in Abhängigkeit von der aktuellen Unfall- bzw. Fahrzeug(insassen)situation ermöglicht und sich dennoch durch einen geringen Platzbedarf sowie eine einfache Herstellbarkeit auszeichnet.

Dies wird bei einem Gassackmodul der eingangs genannten Art dadurch erreicht, daß das Haltemittel auf ein Signal hin aktiv lösbar ist, wodurch der Gassack einen zweiten Zustand einnimmt, in dem die Falte geöffnet ist. Durch die gezielte, von außen gesteuerte Lösbarkeit des aktiven Haltemittels ist also gewährleistet, daß unabhängig vom Gassackinnendruck eine Reduzierung des Gassackinnendrucks durch Überführung des Gassacks aus dem ersten in den zweiten Zustand nur dann erfolgt, wenn dies wirklich gewünscht ist. So kann im Fall einer Kollision mit hoher Geschwindigkeit oder eines besonders schweren Fahrzeuginsassen ein notwendiger hoher Gassackinnendruck und damit ein härterer Gassack aufrechterhalten werden, während bei einem Zusammenstoß mit geringerer Geschwindigkeit oder im Fall eines leichteren Fahrzeuginsassen ein weicherer Gassack zur Verfügung gestellt wird. Zudem wird die gewünschte Reduzierung des Gassackinnendrucks auch zeitlich vom Verlauf des Gassackinnendrucks entkoppelt, wodurch sich ein System ergibt, das variabel auf verschiedenste Situationen einstellbar ist.

Gemäß einer bevorzugten Ausführungsform umfaßt das Haltemittel ein Antriebsmittel, bei dem es sich vorteilhaft um ein pyrotechnisches Antriebsmittel handelt. Dies ermöglicht ein besonders rasches Entfalten der Falte und eine schnelle Verringerung des Gassackinnendrucks, sofern diese notwendig ist.

Vorzugsweise weist das Haltemittel einen Sprengbolzen auf, bei dem es sich um einen einfach aufgebauten und günstig verfügbaren Massenartikel handelt.

Das Haltemittel kann einen Klemmbügel aufweisen, der die Falte in der Gassackwandung fixiert und bei Bedarf gelöst wird.

Vorteilhaft ist wenigstens ein Fangelement vorgesehen, über das ein bei Aktivierung abgetrennter Teil des Haltemittels mit dem Modul verbunden ist. Dadurch wird das Umherfliegen loser Teile verhindert.

Das Haltemittel greift bevorzugt unmittelbar an einem der die Falte bildenden Abschnitte der Wandung an. Dabei kann es sich insbesondere um den in Bezug auf den ersten Zustand des Gassacks innenliegenden Wandungsabschnitt handeln.

Vorteilhaft ist das Haltemittel an einem starren Lagerteil befestigt, wodurch eine besonders sichere Anbringung gewährleistet ist.

Bei dem Lagerteil handelt es sich vorzugsweise um einen Gasgeneratorträger des Gassackmoduls. Dies bietet den Vorteil, daß sich das Gassackmodul als vormontierte Einheit ausbilden läßt, die auf einfache und damit kostengünstige Weise komplett in das Fahrzeug eingesetzt werden kann.

Gemäß einer bevorzugten Ausführungsform weist der entfaltete Gassack im zweiten Zustand ein größeres Volumen auf als im ersten Zustand. Je nach Volumenunterschied zwischen dem ersten und zweiten Zustand kann dadurch bereits eine ausreichende Verringerung des Gassackinnendrucks erzielt werden.

Gemäß einer weiteren Ausführungsform weist die Gassackwandung im Bereich der Falte wenigstens eine Abströmöffnung auf, die vorteilhaft im ersten Zustand des Gassacks durch die Falte verschlossen ist und im zweiten Zustand des Gassacks freigegeben werden kann. So ergibt sich eine noch umfangreichere und kontinuierlich erfolgende Druckverringerung.

Die Gassackwandung kann im ersten Zustand des Gassacks auch mehrere Falten aufweisen. Dadurch werden ein besonders großer Volumenunterschied und damit eine rasche Druckverringerung zwischen dem ersten und zweiten Zustand des Gassacks erreicht.

Zur zusätzlichen Fixierung der Falte ist es möglich, eine Reißnaht vorzusehen. Diese Reißnaht nimmt beim Entfalten des Gassacks einen Teil der Zugkraft auf, die der Gassack auf das Haltemittel ausübt.

Vorteilhaft umfaßt das Haltemittel eine Feder. Diese drückt im ersten Zustand des Gassacks auf die Falte(n) und erleichtert so, je nach konkreter Ausgestaltung, ein Lösen des Haltemittels aus dem Gassack oder ein Abziehen der Falte(n) vom Haltemittel.

Die Feder ist vorzugsweise längs einer Hülse geführt, die zur Lagestabilisierung der Feder dient. Im Fall eines einen pyrotechnischen Antrieb aufweisenden Haltemittels wird ein weiterer Vorteil dadurch erreicht, daß die Hülse um den Antrieb herum angeordnet wird, wodurch dieser gleichsam gekapselt ist. So wird beim Auslösen des pyrotechnischen Treibsatzes eine eventuelle Beeinträchtigung des Gassackgewebes vermieden.

Gemäß einer bevorzugten Ausführungsform der Erfindung weist das Haltemittel ein Befestigungsband auf, das die Falte im ersten Zustand des Gassacks hält. Dieses Befestigungsband wird bei Bedarf gelöst, um den Gassack aus dem ersten in den zweiten Zustand zu überführen.

Das Befestigungsband kann im ersten Zustand des Gassacks durch eine Öffnung in der Falte geführt sein. Die Öffnung dient gleichzeitig im zweiten Zustand des Gassacks als Abströmöffnung.

Um eine Festlegung der Falte zu erzielen, kann ein Ende des Befestigungsbandes mit der Gassackwandung verbunden sein. Alternativ ist es denkbar, ein Ende des Befestigungsbandes an einem starren Lagerteil zu befestigen. Bei dem starren Lagerteil handelt es sich z. B. um den Generatorträger oder ein Gassackhalteblech. In beiden Fällen ist das jeweils andere Ende des Befestigungsbandes lösbar mit dem Lagerteil verbunden, beispielsweise über einen Sprengbolzen. Dabei verhindert die begrenzte Länge des Befestigungsbandes zunächst eine Freigabe der Falte(n). Wird der Sprengbolzen aktiviert, so wird ein Ende des Befestigungsbandes freigegeben, wodurch sich der Gassack weiter ausbreiten kann, die Falten gelöst werden und das Befestigungsband durch die Falten hindurchgezogen wird.

Gemäß einer weiteren Ausführungsform der Erfindung ist vorgesehen, daß das Haltemittel ein Antriebsmittel umfaßt, welches in einen mehrstufigen Gasgenerator integriert ist. Dadurch kann auf ein separates Antriebsmittel zur Lösung der Falte verzichtet werden.

Insbesondere ist vorgesehen, daß bei Zündung einer bestimmten Stufe des Gasgenerators das Befestigungsband wenigstens abschnittsweise zerstört wird. Es wird also nach dem Auslösen des Gassacks bei Bedarf auf ein Signal hin z.B. die zweite Stufe des mehrstufigen Gasgenerators gezündet, wobei ein Teil des entstehenden heißen Gases auf das Befestigungsband geleitet wird. Das Band wird dadurch zumindest teilweise geschmolzen bzw. verbrannt und gibt so die Falte(n) im Gassack frei.

Gemäß einer besonders bevorzugten Ausführungsform ist das Befestigungsband an zwei Enden mit der Gassackwandung verbunden, wobei die Verbindungsstellen räumlich voneinander getrennt sind. Auf diese Weise erfolgt beim Auslösen des Gassackmoduls, wenn das Befestigungsband straffgezogen wird, die Krafteinleitung in die Gassackwandung an zwei unterschiedlichen Stellen, wodurch eine geringere Belastung des die Wandung bildenden Gewebes erreicht wird. Zudem wird eine gewisse Elastizität der Anordnung erzielt, da die beiden Verbindungsstellen sich durch den beim Entfalten des Gassacks auf das Befestigungsband ausgeübten Zug aufeinander zu und voneinander weg bewegen, also gleichsam federn können.

Insbesondere verläuft das Befestigungsband bei aufgeblasenem Gassack V-förmig. Günstige Kräfteverhältnisse ergeben sich, wenn die beiden Schenkel des V etwa einen 90°-Winkel miteinander einschließen.

Das Haltemittel kann eine Schnur aufweisen, die an einem starren Lagerteil lösbar befestigt ist. Soll der Gassack vom ersten in den zweiten Zustand überführt werden, wird die Schnur von dem starren Lagerteil gelöst und gibt auf diese Weise die Falte(n) frei. Eine Schnur bietet den Vorteil, daß sie sich auch durch eine kleine Öffnung in der Falte der Gassackwandung ziehen läßt, um die Falte freizugeben, und daß ein geringeres Packvolumen vorhanden ist.

Vorzugsweise bildet die Schnur eine Schlaufe, durch die das Befestigungsband geführt ist. Bei dieser Ausgestaltung ist wenigstens ein Ende des Befestigungsbandes mit der Gassackwandung verbunden, während ein zweites Ende an der Schnur festgelegt ist, die wiederum durch die Falte(n) geführt und beispielsweise an einem starren Lagerteil lösbar befestigt ist. Besonders vorteilhaft jedoch wird eine solche Schnur mit einem V-förmig verlaufenden Befestigungsband kombiniert, das an zwei Enden mit der Gassackwandung verbunden ist. Die untere Spitze des V ist durch die Schlaufe in der Schnur geführt, die wiederum durch die Falten in der Gassackwandung "gefädelt" und lösbar an einem starren Lagerteil festgelegt wird.

Die Schlaufe läßt sich z.B. dadurch lösbar festlegen, daß sie im ersten Zustand des Gassacks um ein an einem starren Lagerteil befestigtes Antriebsmittel geführt ist.

Vorteilhaft weist dann das Haltemittel eine Klemmeinrichtung für die Schnur auf, die ein Verrutschen der Schnur längs des Antriebsmittels verhindert. Bei dieser Klemmeinrichtung kann es sich beispielsweise um einen am Antriebsmittel vorgesehenen Vorsprung oder um eine Nut zur Aufnahme der Schnur handeln.

Gemäß einer bevorzugten Ausführungsform ist die Klemmeinrichtung einstückig mit einem Zünder eines Gasgenerators ausgebildet. Der Zünder sollte dann in unmittelbarer Nähe des Antriebsmittels angeordnet sein und beispielsweise einen Vorsprung aufweisen, der für die nötige Klemmung der Schnur im ersten Zustand des Gassacks sorgt.

Insbesondere handelt es sich bei dem Lagerteil um das Gehäuse eines Gasgenerators. An diesem kann die Schnur über das Antriebsmittel, beispielsweise einen Sprengbolzen, festgelegt werden. Die Schnur läßt sich dann auf einfache Weise unmittelbar durch den Zünder des Gasgenerators klemmen.

Die Gassackwandung weist bevorzugt im ersten Zustand des Gassacks mehrere Falten mit je mindestens einer Öffnung pro Gassacklage auf, durch die das Befestigungsband geführt ist. Durch das Vorsehen mehrerer Falten läßt sich eine besonders hohe Volumenvergrößerung beim Übergang vom ersten zum zweiten Zustand des Gassacks erreichen.

Vorzugsweise verdeckt das Befestigungsband im ersten Zustand des Gassacks eine Öffnung in der Falte. Da das Befestigungsband, insbesondere wenn es V-förmig verläuft, eine relativ große Breite aufweist, wird so die Öffnung in der Gassackwandung im ersten Zustand des Gassacks sicher verschlossen. Bei dieser Ausführungsform ist besonders vorteilhaft, wenn nicht das Befestigungsband selbst im ersten Zustand des Gassacks lösbar am starren Lagerteil festgelegt wird, sondern eine Schnur zwischengeschaltet wird, die sich beim Lösen des Haltemittels leichter durch die Falte(n) der Gassackwandung ziehen läßt.

Vorzugsweise ändert sich die Tiefe des Gassacks zwischen dem ersten Zustand und dem zweiten Zustand nur um maximal 20%, was beispielsweise durch das Vorsehen von permanenten Haltebändern erreicht werden kann. Dadurch wird ein Zurückprallen des Fahrzeuginsassen durch einen dem Insassen entgegenkommenden Gassack beim Übergang vom ersten in den zweiten Zustand weitgehend verhindert.

Weitere Merkmale und Vorteile der Erfindung ergeben sich aus der nachfolgenden Beschreibung mehrerer bevorzugter Ausführungsformen anhand der beigefügten Zeichnung. In dieser zeigt:
- Figur 1 einen Teilschnitt durch ein Gassackmodul gemäß einer ersten Ausführungsform der Erfindung in einem ersten Zustand des Gassacks;
- Figur 2 einen Schnitt längs der Linie II-II durch das Gassackmodul aus Figur 1;
- Figur 3 einen Schnitt längs der Linie lll-lll durch das Gassackmodul aus Figur 1, jedoch in einem zweiten Zustand des Gassacks;
- Figur 4 einen Schnitt ähnlich Figur 2 durch ein Gassackmodul gemäß einer zweiten Ausführungsform der Erfindung im ersten Zustand des Gassacks;
- Figur 5 einen Schnitt entsprechend Figur 4, jedoch im zweiten Zustand des Gassacks;
- Figur 6 einen Teilschnitt durch ein Gassackmodul gemäß einer dritten Ausführungsform der Erfindung im ersten Zustand des Gassacks;
- Figur 7 einen Schnitt ähnlich Figur 6 durch ein Gassackmodul gemäß einer vierten Ausführungsform der Erfindung, ebenfalls im ersten Zustand des Gassacks;
- Figur 8 einen Teilschnitt durch ein Gassackmodul gemäß einer fünften Ausführungsform der Erfindung;
- Figur 9 einen Teilschnitt durch ein Gassackmodul gemäß einer sechsten Ausführungsform der Erfindung;
- Figur 10 einen Teilschnitt durch ein Gassackmodul gemäß einer siebten Ausführungsform der Erfindung;
- Figur 11 einen Teilschnitt durch ein Gassackmodul gemäß einer achten Ausführungsform der Erfindung;
- Figur 12 einen Teilschnitt durch ein Gassackmodul gemäß einer neunten Ausführungsform der Erfindung;
- Figur 13 einen Teilschnitt durch ein Gassackmodul gemäß einer zehnten Ausführungsform der Erfindung;
- Figur 14 einen Teilschnitt durch ein Gassackmodul gemäß einer elften Ausführungsform der Erfindung;
- Figur 15 einen Teilschnitt durch ein Gassackmodul gemäß einer zwölften Ausführungsform der Erfindung;
- Figur 16 a eine Draufsicht auf die Unterseite eines Gassacks, wie er bei einem Gassackmodul gemäß einer dreizehnten Ausführungsform der Erfindung zum Einsatz kommt, in einem ausgebreiteten Zustand vor der Montage;
- Figur 16b ein vergrößertes Detail aus Figur 16a; und
- Figur 17 eine Unteransicht eines Gasgenerators, wie er beim Gassackmodul gemäß Figur 16a zum Einsatz kommt.

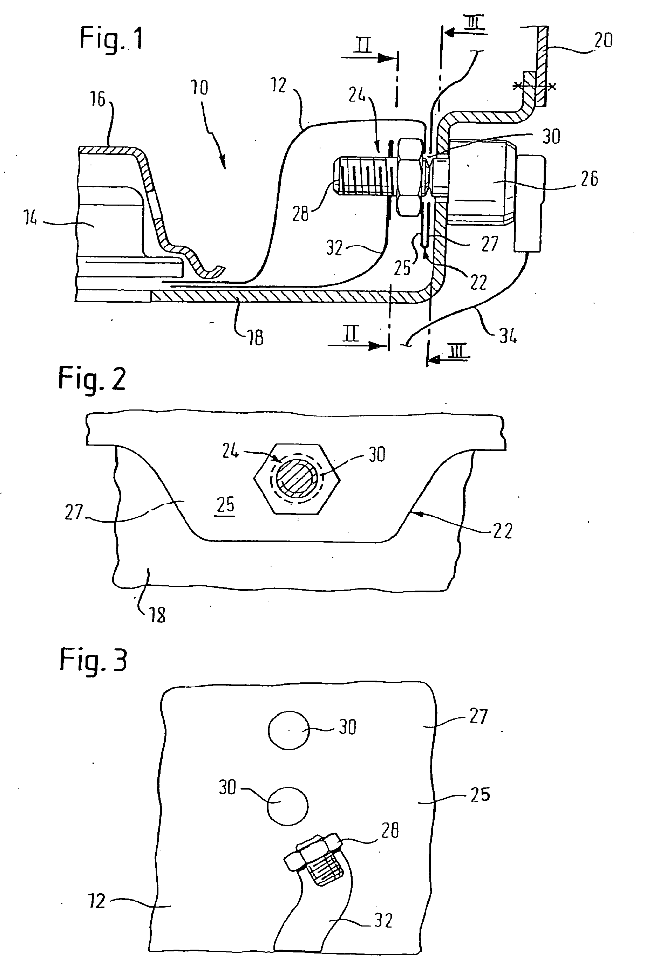

Figur 1 zeigt ausschnittsweise ein Gassackmodul 10 mit einem Gassack 12 und einem Gasgenerator 14, der von einem Käfig 16 umgeben ist. Dabei ist ein Abschnitt des Gassacks 12, der sogenannte Einblasmund, zum Zwecke der Befestigung zwischen dem Käfig 16 und einem Generatorträger 18 geklemmt. In der Figur nur angedeutet ist eine boxförmige Abdeckkappe 20, die mit dem Generatorträger 18 verbunden ist und im nicht ausgelösten Zustand des Gassackmoduls 10 letzteres gegenüber dem Fahrzeuginnenraum abgrenzt.

In dem in den Figuren 1 und 2 gezeigten ersten Zustand des Gassacks 12 weist die Wandung des Gassacks 12 eine Falte 22 auf, die dadurch gebildet ist, daß einander gegenüberliegende Abschnitte 25, 27 der Gassackwandung aneinander anliegen. Die Falte 22 ist über ein Haltemittel in Form eines Sprengbolzens 24 fixiert und zugleich an einem starren Lagerteil, bei dem es sich im gezeigten Beispiel um den Generatorträger 18 handelt, befestigt. Das Haltemittel klemmt die die Falte bildenden Abschnitte 25, 27. Zur Durchführung des Sprengbolzens 24, der aus einem ersten, fest mit dem Generatorträger 18 verbundenen Teil 26 und einem zweiten, bei Aktivierung abgetrennten Teil 28 besteht, sind in beiden die Falte 22 bildenden Abschnitten 25, 27 der Gassackwandung Öffnungen 30 vorgesehen, die einander im ersten Zustand des Gassacks 12 gegenüberliegen.

Ferner ist ein Fangelement in Form eines Fangbandes 32 vorgesehen, das den abtrennbaren Teil 28 des Sprengbolzens 24 mit dem Gassackmodul 10 verbindet, wobei das zweite Ende des Fangbands 32 ebenso wie der Gassack 12 zwischen dem Käfig 16 und dem Generatorträger 18 eingeklemmt ist. Außerdem weist das Gassackmodul 10 ein Kabel 34 auf, das den Sprengbolzen 24 mit einer nicht gezeigten Steuereinheit verbindet.

Wird nun der Gassack 12 ausgelöst, so befindet er sich zunächst in dem in den Figuren 1 und 2 gezeigten ersten Zustand, in dem die Falte 22 durch den Sprengbolzen 24 am Generatorträger 18 festgelegt ist. Dadurch steht nicht das gesamte mögliche Gassackvolumen zur Verfügung, und der Gassack 12 wird rasch aufgeblasen, zumal auch die im Gassack vorhandenen Öffnungen 30 durch die Falte 22 (sowie den Sprengbolzen 24) zunächst verschlossen sind.

Soll nun der Innendruck im ausgelösten Gassack 12 reduziert werden, wird ein entsprechendes Signal von der Steuereinheit über das Kabel 34 an den Sprengbolzen 24 übermittelt, wodurch dessen pyrotechnisches Antriebsmittel aktiviert wird und den Sprengbolzen 24 in die beiden Teile 26 und 28 teilt. Dadurch wird die Falte 22 und damit auch die Öffnungen 30 freigegeben (siehe Figur 3). Der bei der Aktivierung separierende Teil 28 des Sprengbolzens 24 wird durch das Fangband 32, an dessen Stelle natürlich auch ein Draht verwendet werden kann, am Gassackmodul 10 gehalten, um das Umherfliegen loser Teile zu verhindern.

Bei der Einnahme dieses zweiten Zustands reduziert sich der Innendruck im Gassack 12 im Vergleich zum ersten Zustand, da zum einen das Gassackvolumen um den Bereich der Falte 22 vergrößert wird, und zum anderen die Öffnungen 30 freigegeben werden, die gleichzeitig als Abströmöffnungen dienen. Dabei ist je nach Größe, Ausbildung und Anzahl der vorgesehenen Falten 22 sowie der Größe der Öffnungen 30 der Effekt der Volumenvergrößerung oder der Effekt der Gasabströmung dominant. Selbstverständlich ist es auch möglich, keine Abströmöffnungen im Bereich der Falte 22 vorzusehen, wodurch das Gassackmodul 10 auf den Effekt der Volumenvergrößerung reduziert wird.

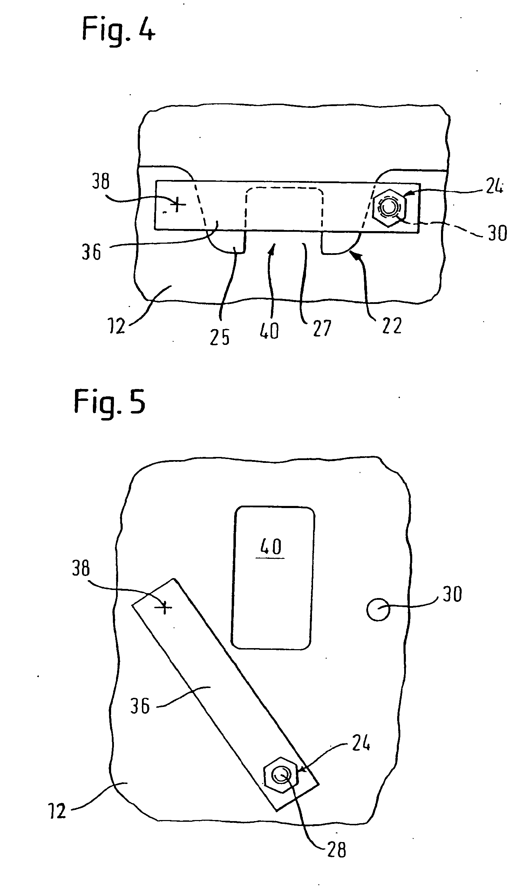

Die Figuren 4 und 5 zeigen eine weitere Ausführungsform des erfindungsgemäßen Gassackmoduls, bei dem das Haltemittel neben einem Sprengbolzen 24 zusätzlich über einen Klemmbügel 36 verfügt. Dieser Klemmbügel 36 ist auf einer Seite über eine Befestigungsschraube 38, auf der anderen Seite über den Sprengbolzen 24 mit dem Generatorträger verbunden und klemmt wiederum eine Falte 22 in der Wandung des Gassacks 12. Neben einer kleinen Öffnung 30 zur Durchführung des Sprengbolzens 24 ist eine weitere, rechteckig ausgebildete Abströmöffnung 40 im Bereich der Falte 22 vorgesehen. Es ist zu beachten, daß bei dieser Ausführungsform der Gassack 12 vom Einblasmund beginnend unmittelbar am Generatorträger entlang geführt ist und die Falte 22 sowie der Klemmbügel 36 somit im Inneren des Gassacks 12 angeordnet sind.

Im ersten Zustand des Gassacks 12 wird die Falte 22 durch den Klemmbügel 36 sowie den Sprengbolzen 24 fixiert, wodurch die Abströmöffnung 40 verschlossen ist. Nach der Aktivierung des Sprengbolzens 24 schwenkt der Klemmbügel 36 um die Befestigungsschraube 38 nach unten und gibt die Falte 22 und damit auch die Abströmöffnung 40 frei.

Natürlich ist es wiederum möglich, auf die Abströmöffnung 40 zu verzichten und zur Reduzierung des Gassackinnendrucks lediglich die durch Lösen des Haltemittels und Entfalten der Falte 22 bewirkte Volumenvergrößerung des Gassacks 12 zu nutzen. Weitere Varianten bestehen darin, mehrere Falten oder mehrere Öffnungen innerhalb einer Falte vorzusehen. Auch kann die Form der entstehenden Öffnung rund oder andersartig sein.

Darüber hinaus kann die Anordnung des Sprengbolzens 24 und des Haltemittels in Bezug zum Gassackmodul 10 auf vielfältige Weise variiert werden. So kann der Klemmbügel 36 (und damit die Falte 22) auch vertikal angeordnet sein, ebenso ist eine Befestigung am Modulboden möglich. Auch die Abdeckkappe 20 kann zur Anbringung des Haltemittels verwendet werden. Ferner ist es möglich, die Gassackfalte statt auf der Innen- auf der Außenseite des Moduls festzulegen, wobei dann das Haltemittel am außenliegenden Wandungsabschnitt des Gassacks unmittelbar angreift.

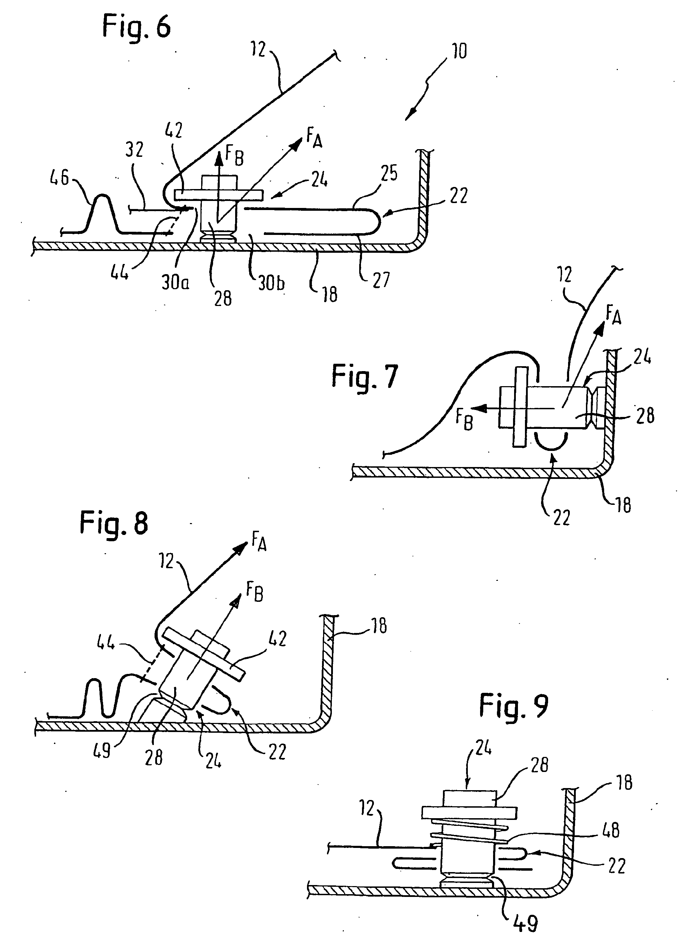

Die Figuren 6 bis 8 zeigen verschiedene Möglichkeiten, den Sprengbolzen 24 am Generatorträger 18 anzubringen. Je nach Anordnung des Sprengbolzens 24 erhält man eine andere durch den sich entfaltenden Gassack 12 auf den Sprengbolzen 24 ausgeübte Zugkraft F_{A} (in den Figuren durch einen Pfeil symbolisiert). Wie zu erkennen ist, schließt die Richtung der Kraft F_{A} bei der Ausführungsform gemäß Figur 7, bei der der Sprengbolzen, wie auch in Figur 1, an einer Seitenwand des Generatorträgers 18 angeordnet ist, einen Winkel von etwa 115° mit der Richtung einer Kraft F_{B} ein, die die Auszugskraft des Sprengbolzens 24 bzw. dessen zweiten Teils 28 darstellt.

Figur 6 zeigt eine Ausführungsform des erfindungsgemäßen Gassackmoduls 10, bei der der Sprengbolzen 24 am Boden des Generatorträgers 18 angeordnet ist. Durch diese Art der Anordnung schließen die durch den sich entfaltenden Gassack 12 ausgeübte Zugkraft F_{A} und die zum Lösen des Bolzens benötigte Auszugskraft F_{B} einen spitzen Winkel von etwa 45° ein. Zur Optimierung der durch den Gassack 12 auf den Sprengbolzen 24 ausgeübten Zugkräfte ist an dem in der Figur oberen Ende des Sprengbolzens 24 eine Beilagscheibe 42 angeordnet. Durch Variation der Größe der Beilagscheibe 42 läßt sich insbesondere der Angriffspunkt der Kraft F_{A} verändern. Zusätzlich ist zwischen den Wandungsabschnitten 25 und 27 eine Reißnaht 44 vorgesehen, die die Falte 22 zunächst zusammenhält. Diese Reißnaht 44 dient ebenfalls zur Zugkraftoptimierung, indem sie den durch den sich entfaltenden Gassack 12 erzeugten Zug wenigstens teilweise aufnimmt. Dadurch lassen sich die Zugkräfte auf den Sprengbolzen 24 minimieren.

Weitere Faktoren zur Optimierung der Gassackinnendruck-Reduzierung durch Lösen des Sprengbolzens 24 sind neben der Anordnung des Sprengbolzens 24, der Größe der Beilagscheibe 42 und dem Vorsehen einer Reißnaht 44 auch die Anzahl der Falten 22 (mit der Anzahl der Falten ändert sich der Volumenunterschied zwischen dem ersten und dem zweiten Zustand des Gassacks) sowie die Größe der Öffnungen 30 bzw. der Abströmöffnung 40. Bei der Ausführungsform gemäß Figur 6 hat die in der Figur oben liegende Öffnung 30a einen kleineren Durchmesser als die untere Öffnung 30b. Natürlich ist der umgekehrte Fall ebenso möglich. Außerdem ist zwischen der Klemmung des Gassacks 12 am Käfig 16 und der Stelle seiner Festlegung am Generatorträger 18 durch den Sprengbolzen 24 eine Gassacklose 46 vorgesehen.

In einer weiteren Ausführungsform (Figur 8) ist der Sprengbolzen 24 derart schräg am Generatorträger 18 befestigt, daß die Richtung der auf den Sprengbolzen 24 ausgeübten Auszugskraft F_{B} mit der Richtung der Gassackzugkraft F_{A} im wesentlichen zusammenfällt. Auf diese Weise wird durch den sich entfaltenden Gassack 12 gleichzeitig ein Zug auf den Sprengbolzen 24 ausgeübt, der dessen Öffnung unterstützt.

Wie in Figur 9 gezeigt ist, kann das Haltemittel eine Feder 48 aufweisen, die um den Sprengbolzen 24 herum angeordnet ist. Die Feder 48 stützt sich am oberen Teil 28 des Sprengbolzens 24 bzw. an einer Beilagscheibe ab und drückt die Falte 22 in der Figur 9 nach unten, in Richtung zum Generatorträger 18 hin. Dadurch ermöglicht es die Feder 48, daß der oberhalb einer Sollbruchlinie 49 liegende Teil 28 beim Aktivieren des Sprengbolzens 24 weitgehend vom Gassack 12 ungehindert abgetrennt werden und den Faltenbereich verlassen kann.

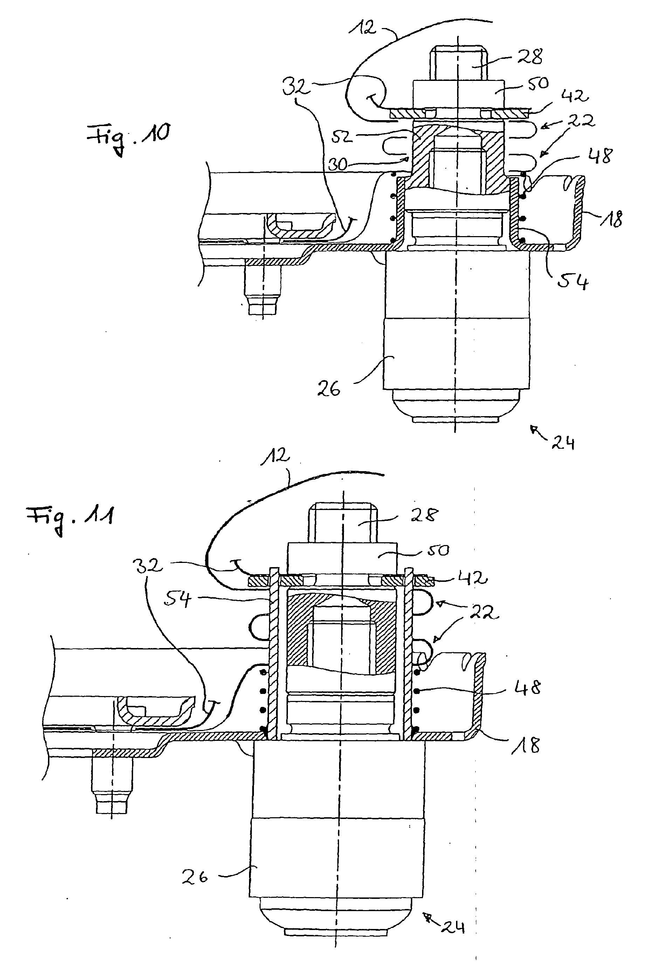

In Figur 10 ist eine weitere Ausführungsform des erfindungsgemäßen Gassackmoduls 10 im ersten Zustand des Gassacks dargestellt, bei der, wie bereits erwähnt, mehrere Falten 22 in der Gassackwandung vorgesehen sind. Wiederum erstreckt sich der aus einem ersten Teil 26 und einem zweiten Teil 28 bestehende Sprengbolzen 24 durch die Öffnungen 30 in den die Falten 22 bildenden Gassackabschnitten hindurch und legt somit die Falten 22 relativ zum Generatorträger 18 fest. Die Beilagscheibe 42 wird am oberen Ende des Sprengbolzens 24 durch eine Mutter 50 gehalten, wobei das Fangband 32 für den abtrennbaren Teil 28 zwischen der Mutter 50 und der Beilagscheibe 42 geklemmt ist. In seinem weiteren Verlauf ist das Fangband 32 durch die Gassackwandung hindurchgeführt. Um den Sprengbolzen 24, genauer gesagt um einen Aufsatz 52 herum, der den oberen Abschnitt des feststehenden Teils 26 bildet, ist eine mit dem Generatorträger 18 verbundene Hülse 54 vorgesehen. Insbesondere wird die Hülse 54 durch Umformen des Generatorträgers 18 gebildet. Die Hülse 54 dient der Führung der Feder 48, um ein Durchbiegen derselben zu verhindern. Außerdem ist durch die Hülse 54 der den pyrotechnischen Treibsatz enthaltende Teil des Sprengbolzens 24 zum Inneren des Gassackmoduls 10 hin abgeschirmt, wodurch eine Beeinträchtigung des Gassacks 12 bei der Auslösung des Sprengbolzens 24 verhindert wird.

Im Unterschied zur Ausführungsform gemäß Figur 9 ist hier die Feder 48 zwischen dem Generatorträger 18 und den Falten 22 angeordnet, drückt also die Falten 22 nach oben gegen die Beilagscheibe 42. Dies ist sinnvoll, da neben dem Teil 26 auch der gesamte Aufsatz 52 (bis unmittelbar unterhalb der Beilagscheibe 42) bei der Aktivierung des Sprengbolzens 24 fest mit dem Generatorträger 18 verbunden bleibt. Die Feder 48 erleichtert nun also das "Abstreifen" der Falten 22 von dem feststehenden Aufsatz 52.

Gleiches gilt für die in Figur 11 gezeigte Ausführungsform, die der der Figur 10 sehr ähnlich ist. Die Hülse 54 ist jedoch als separates Bauteil ausgeführt und erstreckt sich weiter ins Innere des Gassackmoduls. Dabei ist auch die Hülse 54 durch die Öffnungen 30 in den Falten 22 der Gassackwandung geführt. Nach oben wird die Hülse 54 durch die Beilagscheibe 42 sowie die Mutter 50 verschlossen, wodurch besonders wirkungsvoll eine Beeinträchtigung des Gassackgewebes bei der Aktivierung des Sprengbolzens 24 verhindert wird. Der Sprengbolzen 24 ist also gleichsam durch die Hülse 54 und die Beilagscheibe 42 gekapselt.

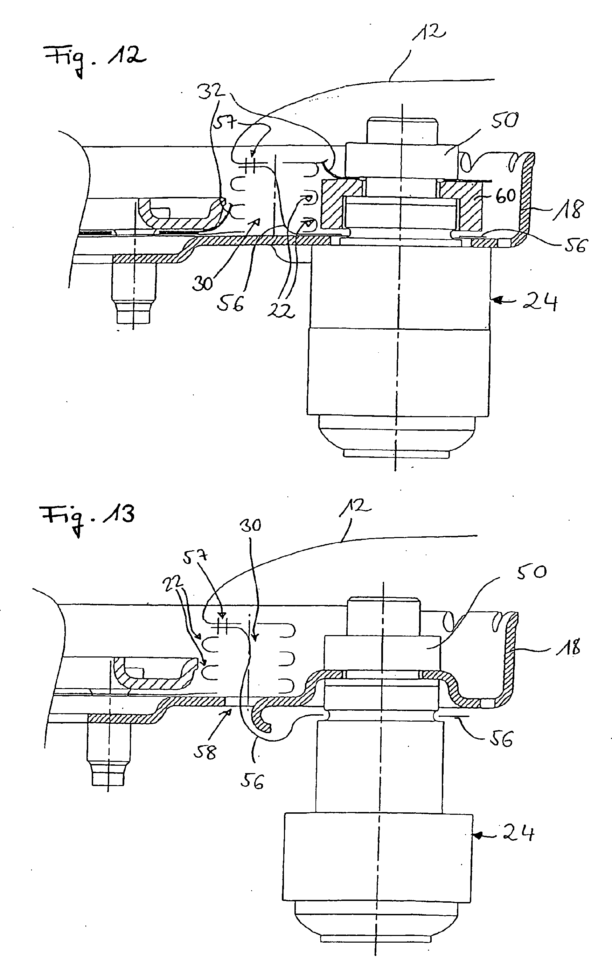

Die beiden in den Figuren 12 und 13 gezeigten Ausführungsformen unterscheiden sich von den bisher beschriebenen hauptsächlich dadurch, daß die Falten 22 des Gassacks 12 nicht direkt durch den Sprengbolzen 24 festgelegt werden, indem dieser durch die Öffnungen 30 in den Falten 22 hindurchgeführt wird. Statt dessen ist durch die Öffnungen 30 ein Befestigungsband 56 geführt, dessen erstes Ende mit der Gassackwandung verbunden, insbesondere vernäht ist (Bezugszeichen 57). Das andere Ende des Befestigungsbands 56 wird durch den Sprengbolzen 24 am Generatorträger 18 festgelegt, entweder auf der Innenseite, wie in Figur 12 gezeigt, oder aber auf der Außenseite des Generatorträgers 18 (Figur 13). Im letzteren Fall ist das Befestigungsband 56 durch eine Öffnung 58 im Generatorträger 18 nach außen geführt. Gemäß Figur 12 ist zwischen der Mutter 50 und dem Generatorträger 18 ein Distanzstück 60 vorgesehen, durch das das Befestigungsband 56 geklemmt wird.

Wird nun in einem Rückhaltefall der Gassack 12 entfaltet, so sind die Falten 22 durch die begrenzte Länge des Befestigungsbands 56 daran gehindert, sich zu entfalten und so die Öffnungen 30 freizugeben. Bei der Aktivierung des Sprengbolzens 24 wird dieser (bei beiden Ausführungen) auf Höhe des Befestigungsbandes 56 geteilt. Dabei wird einmal der obere Teil (Figur 12), einmal der untere Teil (Figur 13) des Sprengbolzens 24 abgetrennt. Bedingt durch den Gassackinnendruck straffen sich die Falten 22, wobei das jetzt lose zweite Ende des Befestigungsbands 56 durch die Öffnungen 30 gezogen wird.

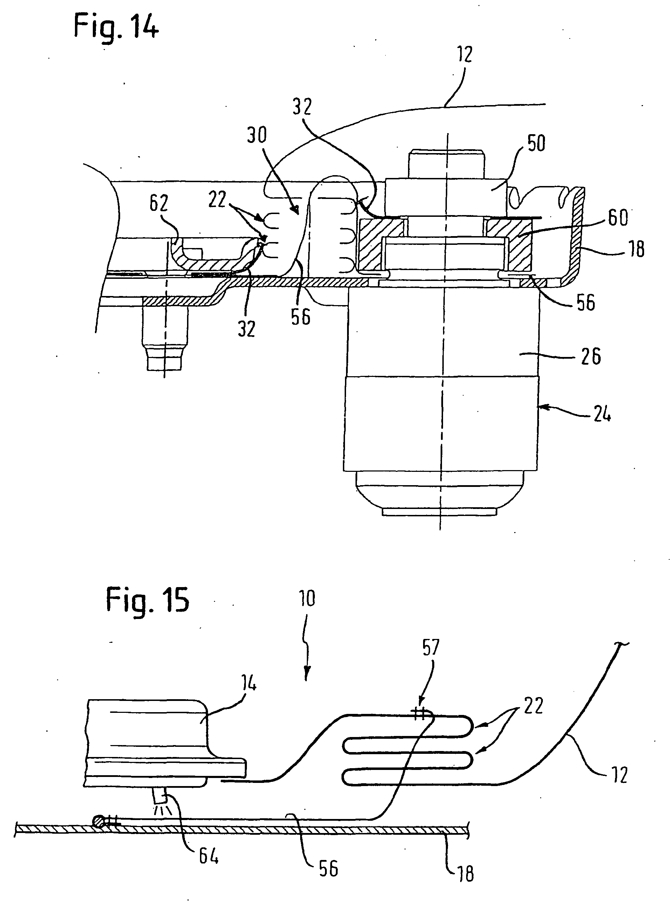

Figur 14 zeigt eine weitere Ausführungsform der Erfindung, wobei bei dieser im Unterschied zu der der Figur 12 das erste Ende des Befestigungsbandes 56 an einem starren Lagerteil befestigt, insbesondere in ein Gassackhalteblech 62 eingehängt ist. Das Befestigungsband 56 ist dann wie gehabt durch die Öffnungen 30 in den Falten 22 geführt und mittels des Sprengbolzens am Generatorträger 18 festgelegt.

Figur 15 schließlich zeigt eine Ausführungsform des erfindungsgemäßen Gassackmoduls 10, bei der ebenfalls die Falten 22 in der Gassackwandung durch das mit dem Gassack 12 vernähte Befestigungsband 56 am Generatorträger 18 festgelegt werden. Im Unterschied zur Figur 12 ist das Befestigungsband 56 jedoch zur Mitte des Gassackmoduls 10, genauer in den Bereich des Gasgenerators 14, geführt und verläuft dort zwischen diesem und dem Generatorträger 18. Der Gasgenerator 14 ist bei dieser Ausführungsform mehrstufig, insbesondere zweistufig ausgebildet. Um das Befestigungsband 56 im Rückhaltefall gezielt freizugeben, ist ein Bypass im Gasgenerator 14 ausgebildet, der bei der Zündung der zweiten Stufe einen Massenstrom von heißem Gas erzeugt, der zumindest teilweise über eine Führungseinrichtung 64 auf das Befestigungsband 56 gelenkt wird. Dadurch wird das Befestigungsband 56 aufgebrannt bzw. aufgeschmolzen, also wenigstens abschnittsweise zerstört und gibt so die Falten 22 frei. Dabei erfolgt die Zündung der zweiten Generatorstufe aktiv auf ein Signal hin. Bei dieser Ausführungsform ist also das Antriebsmittel zur Freigabe des Befestigungsbands 56 in den Gasgenerator 14 integriert, weshalb auf eine separate Antriebsvorrichtung wie beispielsweise einen Sprengbolzen verzichtet werden kann.

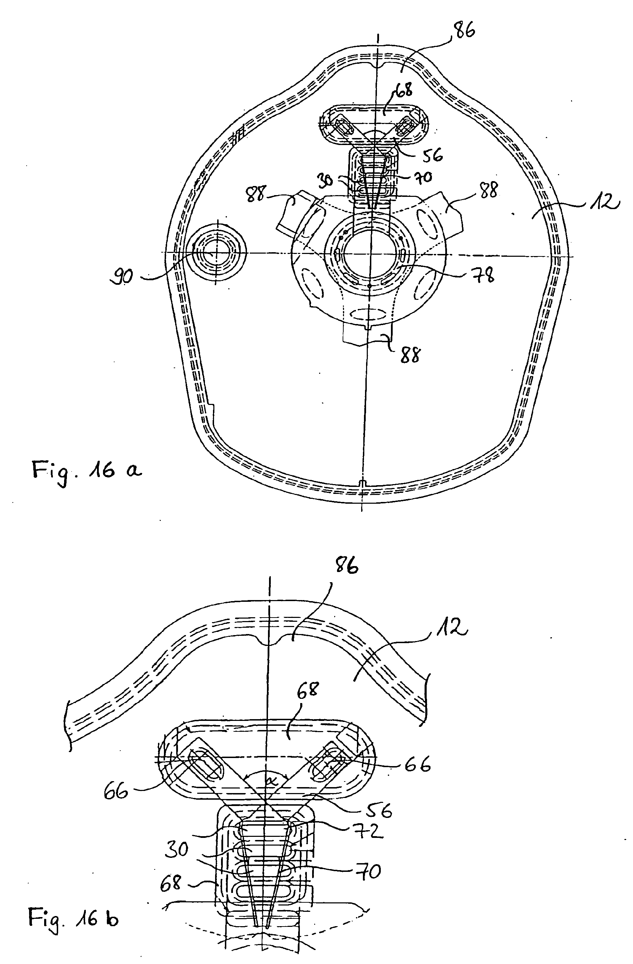

Figur 16a zeigt eine Draufsicht auf die dem Fahrzeuginsassen abgewandte Unterseite eines Gassacks 12, wie er bei einer letzten Ausführungsform des erfindungsgemäßen Gassackmoduls eingesetzt wird. Der Gassack 12 ist in einem ausgebreiteten Zustand vor dem Einbau in das Gassackmodul gezeigt. Auch bei dieser Ausführungsform ist ein Befestigungsband 56 vorgesehen, das jedoch im Unterschied zu den bisherigen Ausführungsformen an zwei Enden mit der Gassackwandung verbunden ist. Das Befestigungsband 56 verläuft in dem in der Figur gezeigten ausgebreiteten Zustand (ebenso wie bei aufgeblasenem Gassack 12) V-förmig, wobei die beiden Schenkel des V einen Winkel α von etwa 90° einschließen (siehe Figur 16b). Die Verbindungsstellen 66 des Befestigungsbands 56 mit der Gassackwandung sind räumlich voneinander getrennt, und die Gassackwandung ist im Bereich der Verbindungsstellen 66 mit einer außen auf die Wandung aufgenähten Verstärkungslage 68 versehen.

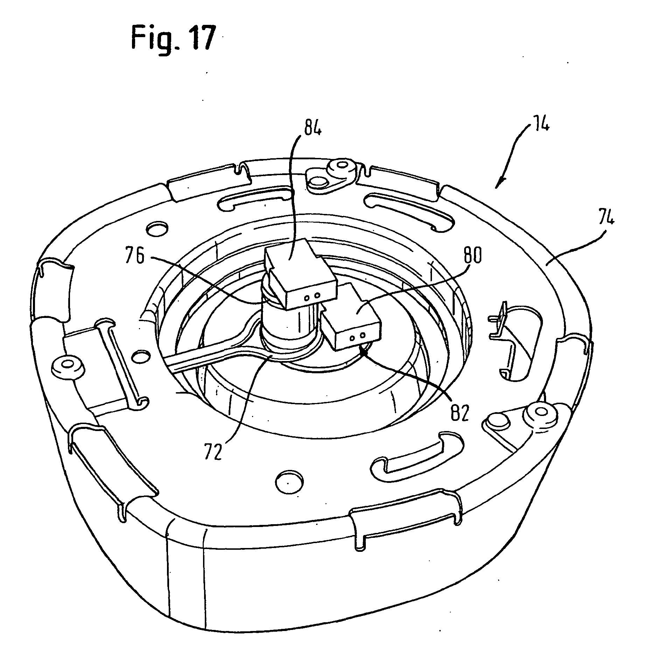

Das V-förmig gefaltete Befestigungsband 56 ist in seinem unteren losen, nicht mit der Gassackwandung verbundenen Bereich durch eine von einer Schnur 70 gebildete Schlaufe 72 geführt. Bei der Montage des Gassackmoduls wird die Schnur durch die Öffnungen 30 in der Gassackwandung (die im Bereich der Öffnungen 30 ebenfalls eine Verstärkungslage 68 aufweist) gefädelt. Durch starkes Anziehen der Schnur 70 wird die Gassackwandung im Bereich der Öffnungen 30 in Falten (Zick-Zack-Faltung) gelegt, ähnlich der Ausführungsform gemäß Figur 12. Durch das Anziehen der Schnur 70 wird das Befestigungsband 56 so weit in die nach der Faltung im wesentlichen übereinanderliegenden Öffnungen 30 hineingezogen, daß das Befestigungsband 56 durch die Öffnungen 30 in den Falten geführt ist und diese somit weitgehend gasdicht abdeckt. Die Schnur 70, die ebenso wie das Befestigungsband 56 einen Teil des Haltemittels bildet, wird anschließend an einem starren Lagerteil des Gassackmoduls, hier dem Gehäuse 74 des Gasgenerators 14, lösbar festgelegt (Figur 17).

Dies wird dadurch erreicht, daß die Schlaufe 72 um ein Antriebsmittel 76 in Form eines Sprengbolzens geführt wird, das am Gehäuse 74 des Gasgenerators 14 befestigt ist. Der in Figur 16a nicht gezeigte Gasgenerator 14 ist im montierten Zustand des Gassackmoduls im Bereich eines Einblasmundes 78 im Inneren des Gassacks 12 angeordnet.

Um zu verhindern, daß die Schlaufe 72 längs des Antriebsmittels 76 verrutscht und dadurch bei der Betätigung des Antriebsmittels 76, hier bei der Zündung des Sprengbolzens, die Freigabe der Schlaufe 72 und somit der Falten in der Gassackwandung behindert wird, umfaßt das Haltemittel außerdem eine Klemmeinrichtung 80 für die Schnur 70. Im gezeigten Beispiel ist die Klemmeinrichtung 80 einstückig mit einem Zünder 82 des Gasgenerators 14 ausgebildet, der, wie aus Figur 17 zu erkennen ist, unmittelbar benachbart zum Antriebsmittel 76 angeordnet ist. Als Klemmeinrichtung 80 wird insbesondere ein Zündpillenstecker des Zünders 82 verwendet, der ebenso wie der Zündpillenstecker 84 des Antriebsmittels 76 nach dem Einhängen der Schlaufe 72 aufgesteckt wird. Der Zündpillenstecker des Zünders 82 sorgt für einen Formschluß mit dem Antriebsmittel 76.

Bei der in Figur 17 gezeigten Ausführung liegen Abschnitte der Schnur 70 zum Rand des Gasgenerators 14 hin aneinander an, was nicht zwingend der Fall sein muß.

Wie weiterhin aus Figur 16a zu erkennen ist, weist der Gassack 12 im Zuschnitt eine Ausbuchtung 86 auf, die gewährleistet, daß im ersten Zustand des Gassacks, also im montierten Zustand mit festgelegten Falten, die obere Hälfte des Gassacks 12 in etwa Halbkreisform hat. Die Ausbuchtung 86 ist zu diesem Zweck radial außerhalb des die Falten bildenden Abschnitts der Gassackwandung angeordnet, also in Verlängerung der Verbindungslinie zwischen den Öffnungen 30 und dem Einblasmund 78.

Ferner verfügt der Gassack 12 über mehrere in seinem Inneren angeordnete Haltebänder 88, die in der Darstellung der Figur 16a "sichtbar" gemacht wurden. Die Haltebänder 88 sind sowohl mit der unteren, in der Figur 16 dargestellten Gassacklage im Bereich des Einblasmunds 78 wie auch mit der in der Figur nicht gezeigten oberen Gassacklage permanent verbunden, z.B. vernäht. Diese Haltebänder 88 begrenzen die Tiefe des sich entfaltenden Gassacks, die sich folglich auch beim Übergang vom ersten Zustand mit festgelegten Falten zum zweiten Zustand mit freigegebenen Falten kaum, insbesondere um höchstens 20%, verändert. Die Volumenvergrößerung des Gassacks 12 erfolgt also in erster Linie in seitlicher bzw. radialer Richtung.

Um außerdem unabhängig von der Aktivierung des Antriebsmittels 76 ein rasches Entleeren des Gassacks 12 nach erfolgter Rückhaltung zu ermöglichen, ist zusätzlich zu den Öffnungen 30 eine permanent offene Abströmöffnung 90 in der Wandung des Gassacks 12 vorgesehen.

Natürlich liegt es im Ermessen des Fachmanns, alle beschriebenen Merkmale sowohl einzeln wie auch in Kombination miteinander einzusetzen, um die erfindungsgemäße Aufgabe zu lösen.

## Patentansprüche

1. Gassackmodul mit
einem Gassack (12), dessen Wandung in einem ersten Zustand des Gassacks (12) wenigstens eine Falte (22) aufweist, die dadurch gebildet ist, dass gegenüberliegende Abschnitte der Wandung aneinander anliegen, und mit
einem Haltemittel, das die gegenüberliegenden Abschnitte aneinander hält und die Falte (22) fixiert,
wobei das Haltemittel auf ein Signal hin passiv oder aktiv lösbar ist, wodurch der Gassack (12) einen zweiten Zustand einnimmt, in dem die Falte (22) geöffnet ist,
**dadurch gekennzeichnet, dass** der Gassack (12) im Zuschnitt eine Ausbuchtung (86) aufweist, die radial außerhalb des die Falte (22) bildenden Abschnitts der Gassackwandung angeordnet ist.

2. Gassackmodul nach Anspruch 1, **dadurch gekennzeichnet, dass** das Haltemittel ein Antriebsmittel umfasst, welches in einen mehrstufigen Gasgenerator (14) integriert ist.

3. Gassackmodul nach einem der vorhergehenden Ansprüche,
**dadurch gekennzeichnet, dass** das Haltemittel ferner ein Befestigungsband (56) aufweist, das die Falte (22) im ersten Zustand des Gassacks (12) hält.

4. Gassackmodul nach Anspruch 3, **dadurch gekennzeichnet, dass** der Sprengbolzen (24) aus einem ersten, fest mit einem starren Lagerteil verbundenen Teil (26) und einem zweiten, bei Aktivierung des Sprengbolzens (24) abgetrennten Teil (28) besteht, wobei der bei Aktivierung des Sprengbolzens (24) abgetrennte Teil (28) außerhalb des Gassackmoduls (10) angeordnet ist.

5. Gassackmodul nach Anspruch 2 und zusätzlich nach Anspruch 3 oder 4, **dadurch gekennzeichnet, dass** das Befestigungsband (56) bei Zündung einer bestimmten Stufe des Gasgenerators (14) wenigstens abschnittsweise zerstört wird.

6. Gassackmodul nach einem der Ansprüche 3 bis 5, **dadurch gekennzeichnet, dass** das Befestigungsband (56) an zwei Enden mit der Gassackwandung verbunden ist, wobei die Verbindungsstellen (66) räumlich voneinander getrennt sind.

7. Gassackmodul nach Anspruch 6, **dadurch gekennzeichnet, dass** das Befestigungsband (56) bei aufgeblasenem Gassack (12) V-förmig verläuft.

8. Gassackmodul nach einem der vorhergehenden Ansprüche, **dadurch gekennzeichnet, dass** das Haltemittel eine Schnur (70) aufweist, die an einem starren Lagerteil lösbar befestigt ist.

9. Gassackmodul nach einem der Ansprüche 3 bis 7 und zusätzlich nach Anspruch 8, **dadurch gekennzeichnet, dass** die Schnur (70) eine Schlaufe (72) bildet, durch die das Befestigungsband (56) geführt ist.

10. Gassackmodul nach Anspruch 9, **dadurch gekennzeichnet, dass** die Schlaufe (72) um ein an einem starren Lagerteil befestigtes Antriebsmittel (76) geführt ist.

11. Gassackmodul nach Anspruch 10, **dadurch gekennzeichnet, dass** das Haltemittel eine Klemmeinrichtung (80) für die Schnur (70) aufweist, die ein Verrutschen der Schnur (70) längs des Antriebsmittels (76) verhindert.

12. Gassackmodul nach einem der Ansprüche 8 bis 11, **dadurch gekennzeichnet, dass** die Gassackwandung im ersten Zustand des Gassacks (12) mehrere Falten (22) mit je mindestens einer Öffnung (30) pro Gassacklage aufweist, durch die die Schnur (70) geführt ist.

13. Gassackmodul nach Anspruch 11, **dadurch gekennzeichnet, dass** die Klemmeinrichtung (80) einstückig mit einem Zünder (82) eines Gasgenerators (14) ausgebildet ist.

14. Gassackmodul nach einem der Ansprüche 8 bis 13, **dadurch gekennzeichnet, dass** das Lagerteil das Gehäuse (74) eines Gasgenerators (14) ist.

15. Gassackmodul nach einem der vorhergehenden Ansprüche, **dadurch gekennzeichnet, dass** das Haltemittel ein Antriebsmittel, vorzugsweise ein pyrotechnisches Antriebsmittel, insbesondere einen Sprengbolzen (24) aufweist.

16. Gassackmodul nach einem der vorhergehenden Ansprüche, **dadurch gekennzeichnet, dass** im zweiten Zustand ein geringerer Innendruck im entfalteten Gassack (12) herrscht als im ersten Zustand und/oder im zweiten Zustand ein größeres Volumen aufweist als im ersten Zustand.

17. Gassackmodul nach einem der vorhergehenden Ansprüche, **dadurch gekennzeichnet, dass** die Gassackwandung im ersten Zustand des Gassacks (12) mehrere Falten (22) aufweist.

## Claims

1. A gas bag module comprising
a gas bag (12) whose wall, in a first state of the gas bag (12), has at least one pleat (22) that is formed in that opposite sections of the wall lie against each other, and comprising
a holding means that holds the opposite sections against each other and fixes the pleat (22) in place,
the holding means being passively or actively releasable in response to a signal, as a result of which the gas bag (12) assumes a second state, in which the pleat (22) is opened,
**characterized in that** in the blank, the gas bag (12) has a bulge (86) that is arranged radially outside the section of the gas bag wall that forms the pleat (22).

2. The gas bag module according to claim 1, **characterized in that** the holding means comprises a drive means that is integrated in a multi-stage gas generator (14).

3. The gas bag module according to either of the preceding claims, **characterized in that** the holding means further includes a fastening strap (56) that holds the pleat (22) in the first state of the gas bag (12).

4. The gas bag module according to claim 3, **characterized in that** the explosive bolt (24) consists of a first part (26) that is firmly connected to a rigid bearing part, and a second part (28) that is separated upon activation of the explosive bolt (24), the part (28) that is separated upon activation of the explosive bolt (24) being arranged outside the gas bag module (10).

5. The gas bag module according to claim 2 and additionally according to claim 3 or 4, **characterized in that** upon ignition of a particular stage of the gas generator (14), the fastening strap (56) is at least partially destroyed.

6. The gas bag module according to any of claims 3 to 5, **characterized in that** the fastening strap (56) has two ends connected to the gas bag wall, the junctions (66) being spatially separated from each other.

7. The gas bag module according to claim 6, **characterized in that** the fastening strap (56) runs in a V-shape when the gas bag (12) is in the inflated state.

8. The gas bag module according to any of the preceding claims, **characterized in that** the holding means includes a cord (70) that is releasably fastened to a rigid bearing part.

9. The gas bag module according to any of claims 3 to 7 and additionally according to claim 8, **characterized in that** the cord (70) forms a loop (72) through which the fastening strap (56) is passed.

10. The gas bag module according to claim 9, **characterized in that** the loop (72) is passed around a drive means (76) that is fastened to a rigid bearing part.

11. The gas bag module according to claim 10, **characterized in that** the holding means includes a clamping means (80) for the cord (70) which prevents a slipping of the cord (70) along the drive means (76).

12. The gas bag module according to any of claims 8 to 11, **characterized in that** in the first state of the gas bag (12), the gas bag wall includes several pleats (22) each having at least one opening (30) per gas bag layer, through which the cord (70) passes.

13. The gas bag module according to claim 11, **characterized in that** the clamping means (80) is formed integrally with an igniter (82) of a gas generator (14).

14. The gas bag module according to any of claims 8 to 13, **characterized in that** the bearing part is the housing (74) of a gas generator (14).

15. The gas bag module according to any of the preceding claims, **characterized in** the holding means includes a drive means, preferably a pyrotechnical drive means, in particular an explosive bolt (24).

16. The gas bag module according to any of the preceding claims, **characterized in that**, in the second state, a lower internal pressure prevails in the unfolded gas bag (12) than in the first state and/or it has a larger volume in the second state than in the first state.

17. The gas bag module according to any of the preceding claims, **characterized in that**, in the first state of the gas bag (12), the gas bag wall includes several pleats (22).

## Revendications

1. Module de coussin à gaz comportant
un coussin à gaz (12), dont la paroi présente dans un premier état du coussin à gaz (12) au moins un pli (22) qui est formé par le fait que des tronçons opposés de la paroi sont en appui l'un sur l'autre, et comportant
un moyen de retenue qui maintient l'un sur l'autre les tronçons opposés et qui fixe le pli (22),
le moyen de retenue pouvant être détaché passivement ou activement sur un signal, grâce à quoi le coussin à gaz (12) adopte un deuxième état dans lequel le pli (22) est ouvert,
**caractérisé en ce que** le coussin à gaz (12) présente dans la découpe une courbure (86) qui est agencée radialement à l'extérieur du tronçon de la paroi de coussin à gaz formant le pli (22).

2. Module de coussin à gaz selon la revendication 1, **caractérisé en ce que** le moyen de retenue comprend un moyen de propulsion qui est intégré dans un générateur de gaz (14) à plusieurs étages.

3. Module de coussin à gaz selon l'une des revendications précédentes, **caractérisé en ce que** le moyen de retenue présente en outre une bande de fixation (56) qui retient le pli (22) dans le premier état du coussin à gaz (12).

4. Module de coussin à gaz selon la revendication 3, **caractérisé en ce que** le boulon explosif (24) est composé d'une première partie (26) qui est reliée de manière solidaire à une pièce de montage rigide, et d'une deuxième partie (28) qui est séparée lors de l'activation du boulon explosif (24), la partie (28) séparée lors de l'activation du boulon explosif (24) étant agencée à l'extérieur du module (10) de coussin à gaz.

5. Module de coussin à gaz selon la revendication 2 et en outre selon la revendication 3 ou 4, **caractérisé en ce que** lors de l'allumage d'un étage déterminé du générateur de gaz (14), la bande de fixation (56) est détruite au moins par tronçons.

6. Module de coussin à gaz selon l'une des revendications 3 à 5, **caractérisé en ce que** la bande de fixation (56) est reliée par deux extrémités à la paroi de coussin à gaz, les points de liaison (66) étant séparés dans l'espace l'un de l'autre.

7. Module de coussin à gaz selon la revendication 6, **caractérisé en ce que** la bande de fixation (56) s'étend en forme de V lorsque le coussin à gaz (12) est gonflé.

8. Module de coussin à gaz selon l'une des revendications précédentes, **caractérisé en ce que** le moyen de retenue présente un cordon (70) qui est fixé de manière détachable sur une pièce de montage rigide.

9. Module de coussin à gaz selon l'une des revendications 3 à 7 et en outre selon la revendication 8, **caractérisé en ce que** le cordon (70) forme une boucle (72) à travers laquelle est guidée la bande de fixation (56).

10. Module de coussin à gaz selon la revendication 9, **caractérisé en ce que** la boucle (72) est guidée autour d'un moyen de propulsion (76) fixé sur une pièce de montage rigide.

11. Module de coussin à gaz selon la revendication 10, **caractérisé en ce que** le moyen de retenue présente un dispositif de serrage (80) pour le cordon (70) qui empêche un glissement du cordon (70) le long du moyen de propulsion (76).

12. Module de coussin à gaz selon l'une des revendications 8 à 11, **caractérisé en ce que** la paroi de coussin à gaz présente, dans le premier état du coussin à gaz (12), plusieurs plis (22) avec chacun au moins une ouverture (30) par couche de coussin à gaz, à travers laquelle est guidé le cordon (70).

13. Module de coussin à gaz selon la revendication 11, **caractérisé en ce que** le dispositif de serrage (80) est réalisé d'un seul tenant avec un allumeur (82) d'un générateur de gaz (14).

14. Module de coussin à gaz selon l'une des revendications 8 à 13, **caractérisé en ce que** la pièce de montage est le boîtier (74) d'un générateur de gaz (14).

15. Module de coussin à gaz selon l'une des revendications précédentes, **caractérisé en ce que** le moyen de retenue comprend un moyen de propulsion, de préférence un moyen de propulsion pyrotechnique, en particulier un boulon explosif (24).

16. Module de coussin à gaz selon l'une des revendications précédentes, **caractérisé en ce que** dans le deuxième état règne dans le coussin à gaz (12) déployé une pression intérieure qui est plus faible que dans le premier état et/ou en ce qu'il présente, dans le deuxième état, un volume qui est plus grand que dans le premier état.

17. Module de coussin à gaz selon l'une des revendications précédentes, **caractérisé en ce que** dans le premier état du coussin à gaz (12), la paroi de coussin à gaz présente plusieurs plis (22).
